(19) Europäisches Patentamt European Patent Office Office européen des brevets

(11) **EP 3 189 894 B1**

(12) **EUROPEAN PATENT SPECIFICATION**

(45) Date of publication and mention of the grant of the patent:
**29.04.2020   Bulletin 2020/18**

(51) Int Cl.:
*B01J 31/28* [(2006.01)]       *B01J 37/18* [(2006.01)]
*C01B 4/00* [(2006.01)]        *C01B 5/02* [(2006.01)]
*B01J 23/42* [(2006.01)]       *B01J 27/13* [(2006.01)]
*B01J 37/02* [(2006.01)]

(21) Application number: **15837588.1**

(22) Date of filing: **31.08.2015**

(86) International application number:
**PCT/JP2015/074606**

(87) International publication number:
**WO 2016/035737 (10.03.2016 Gazette 2016/10)**

(54) **CATALYST FOR WATER-HYDROGEN EXCHANGE REACTION, METHOD FOR PRODUCING SAME AND APPARATUS FOR WATER-HYDROGEN EXCHANGE REACTION**

KATALYSATOR FÜR WASSER-WASSERSTOFF-AUSTAUSCHREAKTION, VERFAHREN ZUR HERSTELLUNG DAVON UND VORRICHTUNG FÜR WASSER-WASSERSTOFF-AUSTAUSCHREAKTION

CATALYSEUR POUR RÉACTION D'ÉCHANGE EAU-HYDROGÈNE, PROCÉDÉ DE PRODUCTION ASSOCIÉ ET APPAREIL POUR RÉACTION D'ÉCHANGE EAU-HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2014   JP 2014180755**

(43) Date of publication of application:
**12.07.2017   Bulletin 2017/28**

(73) Proprietors:
• **National Institutes for Quantum and Radiological Science and Technology**
  **Inage-ku**
  **Chiba-shi**
  **Chiba 263-8555 (JP)**
• **Tanaka Kikinzoku Kogyo K.K.**
  **Chiyoda-ku**
  **Tokyo 100-6422 (JP)**

(72) Inventors:
• **NOGUCHI, Hirosi**
  **Tsukuba-shi**
  **Ibaraki 300-4247 (JP)**
• **OHSHIMA, Yuusuke**
  **Tsukuba-shi**
  **Ibaraki 300-4247 (JP)**
• **KUBO, Hitoshi**
  **Tsukuba-shi**
  **Ibaraki 300-4247 (JP)**
• **TANIUCHI, Junichi**
  **Tsukuba-shi**
  **Ibaraki 300-4247 (JP)**
• **IWAI, Yasunori**
  **Naka-gun**
  **Ibaraki 319-1195 (JP)**

(74) Representative: **Dey, Michael et al**
**Weickmann & Weickmann**
**Patent- und Rechtsanwälte PartmbB**
**Postfach 860 820**
**81635 München (DE)**

(56) References cited:
**EP-A1- 2 514 526       EP-A1- 3 127 609
JP-A- S 538 389        JP-A- S 567 647
JP-A- S5 411 069       JP-A- S5 689 845
JP-A- S6 094 142       JP-A- 2011 139 991
US-A- 3 981 976**

Remarks:
The file contains technical information submitted after the application was filed and not included in this specification

## Description

Technical Field

The present invention relates to the use of a catalyst for a water-hydrogen exchange reaction, which is a reaction between moisture and hydrogen, in which moisture and hydrogen, at least one of which contains a hydrogen isotope, are allowed to react to promote hydrogen isotope exchange.

Background Art

As a method for separating a hydrogen isotope from water or hydrogen containing a hydrogen isotope (deuterium (2H), tritium (3H)), a reaction process using a water-hydrogen exchange reaction (water-hydrogen isotope exchange reaction) is known. In a water-hydrogen exchange reaction, use of a catalyst allows an isotope separation at relatively low temperatures. This is advantageous in that as compared with other hydrogen isotope separation technologies, such as a water distillation reaction and the dual temperature exchange process, the reduction of the scale of facilities and the saving of energy consumption are achieved more easily. In addition, when a water-hydrogen exchange reaction is combined with an electrolytic reaction, it also becomes possible to handle high-concentration tritium. For example, it is deemed that among kinds of water discharged from nuclear power plants and containing high-concentration radioactive substances over the environmental emission standard, water containing a hydrogen isotope is particularly difficult to treat. The hydrogen isotope separation technology using a water-hydrogen exchange reaction is also applicable to the treatment of such waste water from nuclear power plants, and is expected to be effective.

Patent Document 2 relates to a hydrogen combustion catalyst comprising a catalyst metal supported on a carrier composed of an inorganic oxide, wherein a functional group having at the end thereof at least an alkyl group having three or less carbon atoms is bonded by substitution to each of a certain fraction or the whole of a hydroxyl group on the surface of the carrier.

Patent Document 3 is directed to a process for hydrogen isotope concentration between liquid water and hydrogen gas, wherein liquid water and hydrogen gas are contacted, in an exchange section, with one another and with at least one catalyst body comprising at least one metal selected from Group VIII of the Periodic Table and preferably a support therefor, the catalyst body has a liquid-water-repellant, gas permeable polymer or organic resin coating, preferably a fluorinated olefin polymer or silicone coating, so that the isotope concentration takes place by two simultaneously occurring steps, while the hydrogen gas fed to the exchange section is derived in a reactor vessel from liquid water that has passed through the exchange section.

Patent Document 4 is directed to a hydrogen combustion catalyst comprising a catalyst metal supported on a carrier composed of an inorganic oxide, wherein a functional group having at least one alkyl group with three or less carbon atoms is bonded to a terminal of a hydroxyl group on the carrier surface by substitution, platinum and palladium are supported as the catalyst metal, and a chlorine content is 300 ppm to 2000 ppm per 1 mass% of a total supported amount of a supported amount of platinum and a supported amount of palladium.

Here, as a problem regarding a catalyst for a water-hydrogen exchange reaction, the inevitability of contact with moisture can be mentioned. This is because the activity of a catalyst may decrease upon contact with moisture. Thus, as an approach to solve the problem of a decrease in activity resulting from contact with moisture, a technology for rendering the catalyst hydrophobic has been considered. For example, Patent Document 1 discloses a catalyst composed of chromium- or titanium-containing platinum supported on a carbon carrier dispersed in a substrate such as polyfluoroethylene.

Related Art Document

Patent Documents

Patent Document 1: JP 2005-000912 A
Patent Document 2: EP 2 514 526 A1
Patent Document 3 : US 3,981,976
Patent Document 4 : EP 3 127 609 A1

## Summary of the Invention

Problems to be Solved by the Invention

However, in the catalyst of Patent Document 1, regarding its constituent components, there are problems in practical use in relation to the usage thereof. That is, in the catalyst of this related art, the substrate (catalyst carrier), which is a member that occupies a major part of the catalyst, is composed of a resin (organic substance). A catalyst containing an organic substance as a main constituent has a problem in that there is a danger of ignition in the case where, for example, local heating is caused by the reaction heat in a catalyst layer. In addition, a resin also has the risk of radiation degradation, and thus has a problem in that it may be damaged by radioactive substances, such as tritium, and become unable to function as a structure for supporting the catalytic metal.

In addition, in the development of catalysts, there is constantly a fundamental requirement to improve the activity, and even a catalyst for a water-hydrogen exchange reaction cannot escape from this requirement. In this respect, although the catalyst of Patent Document 1 has a certain degree of catalytic activity, it has not yet achieved sufficient separation of a hydrogen isotope.

Thus, the present invention is directed to the use of a catalyst for a water-hydrogen exchange reaction as defined in claim 1, wherein the catalyst is free from the risk of burning of or damage to a carrier and also can exhibit a high activity heretofore unattainable.

Means for Solving the Problems

The present invention aimed at solving the problems mentioned above relates to a catalyst for a water-hydrogen exchange reaction, for bringing moisture containing a hydrogen isotope into contact with a hydrogen-containing gas and promoting an exchange reaction between a hydrogen isotope in the moisture and a hydrogen atom in the hydrogen-containing gas. The catalyst for a water-hydrogen exchange reaction includes a catalytic metal supported on a carrier formed of an inorganic oxide, the carrier is formed of an inorganic oxide that has a hydrophobic compound bound to a surface of the inorganic oxide and has been rendered hydrophobic, and the catalytic metal is metal containing platinum as an essential component.

The catalyst for a water-hydrogen exchange reaction used in the present invention uses an inorganic oxide as a carrier, and the inorganic oxide applied has a hydrophobic compound bound to a surface of the inorganic oxide and has been hydrophobized. The reason why an inorganic oxide is applied as a carrier is that even in the case where local heating is caused by the reaction heat in the catalyst layer, an inorganic oxide has no danger of ignition and also has no risk of radiation damage due to radioactive substances. However, an inorganic oxide has high affinity to water and easily adsorbs moisture. Thus, the inorganic oxide is rendered hydrophobic by a predetermined hydrophobic compound, thereby suppressing a decrease in activity due to moisture adsorption.

In addition, in the catalyst for a water-hydrogen exchange reaction used in the present invention, platinum (Pt) is present as the catalytic metal. According to the present inventors' examination, when combined with a hydrophobized inorganic oxide carrier, only a catalytic metal consisting of platinum exhibits a satisfactory activity for a water-hydrogen exchange reaction.

Hereinafter, each constituent of the catalyst used in the present invention will be described in further detail. First, with respect to a carrier, the reason why an inorganic oxide is applied is as described above. Preferred examples of inorganic oxides include those containing at least one of alumina, silica, zeolite, zirconia, and titania. Mixed inorganic oxides, such as silica-alumina, are also applicable. These inorganic oxides are also known as catalyst carriers for other reactions, and they are porous as required for carriers and also have excellent heat resistance. With respect to such an inorganic oxide, the pore size is particularly preferably in a predetermined range. The pore size of the inorganic oxide carrier is preferably 6 nm or more and 200 nm or less.

Incidentally, the shape of the carrier is not particularly limited. Although those formed in the shape of cylindrical or spherical pellets are common, in addition to them, a suitable support, such as a honeycomb or a mesh, is possibly coated with an inorganic oxide, and the coating layer serves as a carrier.

Then, in the catalyst used in the present invention, the inorganic oxide is hydrophobized by a hydrophobic compound and then applied as a carrier. Hydrophobization by a hydrophobic compound is achieved by modifying a hydroxyl group (OH group), which is a hydrophilic group, on the inorganic oxide surface with a hydrophobic compound.

Examples of hydrophobic compounds bound to an inorganic oxide in the catalyst used in the present invention include organic silane compounds and fluorine resin compounds. They are hydrophobic, and their binding to an inorganic oxide is also excellent. In the present invention, an organic silane compound is an organic compound having a carbon-silicon bond and has a linear, cyclic, or branched functional group containing one or more of carbon, hydrogen, oxygen, chlorine, and fluorine. Then, an organic silane compound is covalently bound to an inorganic oxide carrier through silicon. Meanwhile, a fluorine resin compound is a fluorine-containing resin made of a polymer having at least one kind of repeating unit in which the ratio (F/C) of the number of fluorine atoms to the number of carbon atoms is 1.0 or more. A fluorine resin is fixed onto an inorganic oxide by intermolecular forces.

On the inorganic oxide carrier that has been hydrophobization-treated as described above, platinum is indispensably supported as the catalytic metal. The reason why platinum is indispensable as catalytic metal is that in ensuring the activity for a water-hydrogen exchange reaction, a catalyst without platinum does not exhibit a sufficient activity. Generally, as metals that are active as catalytic metals, a large number of precious metals (palladium, ruthenium, etc.) are also known in addition to platinum. However, for a water-hydrogen exchange reaction, these precious metals do not exhibit a sufficient activity. The catalytic metal in the catalyst used in the present invention is composed only of platinum.

Here, the amount of platinum supported is preferably 0.3 mass% or more based on the total mass of the catalyst (the total mass of the inorganic oxide modified with a functional group and the catalytic metal). This is because the catalyst has a sufficient activity when it contains 0.3 mass% or more platinum. The upper limit of the amount of platinum supported is preferably 15.0 mass% or less for the reason of a decrease in activity due to sintering.

Then, the catalyst used in the present invention contains chlorine within a certain range. Usually, depending on the reaction system to which the catalyst is applied, chlorine is often evaded as a catalyst poison. However, in a water-hydrogen exchange reaction, according to the present inventors' examination, the presence of chlorine to some extent is rather preferable. Specifically, the chlorine content per 1 mass% of the amount of platinum supported is 25 ppm or more and 1,000 ppm or less. In the case where the chlorine content is less than 25 ppm per 1 mass% of the amount of platinum supported, the capability of separating a hydrogen isotope is unlikely to improve. Meanwhile, when the chlorine content is more than 1,000 ppm per 1 mass% of the amount of platinum supported, chlorine functions as an ordinary catalyst poison, and also in this case, the catalytic activity decreases. Incidentally, a chlorine content in the catalyst used in the present invention is the content of chlorine atoms and refers to the content based on the total mass of the catalyst. In addition, as shown by "per 1 mass% amount of platinum supported", in the catalyst used in the present invention, the actual content range (measured value) of the suitable chlorine content varies depending on the amount of platinum supported. For example, when the catalyst has an amount of platinum supported of 0.3 mass% (the lower limit of the suitable range of amount of platinum supported), the chlorine content thereof is preferably within a range of 7.5 ppm or more and 300 ppm or less.

Next, the method for producing a catalyst used in the present invention will be described. The method for producing a catalyst used in the present invention includes: (a) a step of bringing an inorganic oxide to serve as carrier into contact with a solution containing a hydrophobic compound to bind the hydrophobic compound to a surface of the inorganic oxide to perform a hydrophobization treatment; (b) a supporting step of bringing a metal compound solution containing at least a platinum compound into contact with the hydrophobization-treated carrier to support at least platinum ions; and (c) a heat treatment step of heat-treating the carrier after the supporting step to reduce the platinum ions.

The carrier hydrophobization step (step (a)) is a step of bringing a solution containing a hydrophobic compound into contact with an inorganic oxide carrier to bind the hydrophobic compound to a surface of the carrier. Here, the hydrophobic compound contained in the hydrophobic compound solution for the hydrophobization treatment is, when distinguished according to its composition, composed of at least one of a functional silane agent, a silylating agent, a silane coupling agent, and a fluorine resin agent

As functional silane agents and silylating agents, silane agents such as alkoxysilanes, silazane, and siloxane are applicable. Specific examples thereof include methyltrimethoxysilane, trimethylethoxysilane, trimethylchlorosilane, dimethyldimethyldimethoxysilane, dimethyldiethoxysilane, dimethyldichlorosilane, methyltrimethoxysilane, methyltriethoxysilane, methyltrichlorosilane, triethylmethoxysilane, triethylethoxysilane, triethylchlorosilane, diethyldimethoxysilane, diethyldiethoxysilane, diethyldichlorosilane, ethyltrimethoxysilane, ethyltriethoxysilane, ethyltrichlorosilane, tripropylmethoxysilane, tripropylethoxysilane, tripropylchlorosilane, dipropyldimethoxysilane, dipropyldiethoxysilane, dipropyldichlorosilane, propyltrimethoxysilane, propyltriethoxysilane, propyltrichlorosilane, phenyltrimethoxysilane, hexyltrimethoxysilane, and hexamethyldisilazane.

Examples of silane coupling agents include silane coupling agents having a vinyl group, an epoxy group, a styryl group, a methacrylic group, an acrylic group, an amino group, an isocyanurate group, a ureido group, a mercapto group, a sulfide group, and an isocyanate group. Specific examples thereof include vinyltrimethoxysilane, vinyltriethoxysilane, 2-(3,4-epoxycyclohexyl)ethyltrimethoxysilane, 3-glycidoxypropylmethyldimetoxysilane, 3-glycidoxypropyltrimetoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-m3-aminopropyltrimethoxysilane, tris(trimethoxysilylpropyl)isocyanurate, 3-ureidopropyltrialkoxysilane, 3-mercaptopropylmethyldimethoxysilane, 3-mercaptopropyltrimethoxysilane, bis(triethoxysilylpropyl)tetrasulfide, and 3-isocyanatepropyltriethoxysilane.

Examples of fluorine resin agents include fluorine resin compounds such as polytetrafluoroethylene (PTFE), polychlorotrifluoroethylene (PCTFE), polyvinylidene fluoride (PVDF), polyvinyl fluoride (PVF), a tetrafluoroethylene-per-

EP 3 189 894 B1

fluoroalkyl vinyl ether copolymer (PFA), a tetrafluoroethylene-hexafluoropropylene copolymer (FEP), an ethylene-tetrafluoroethylene copolymer (ETFE), an ethylene-chlorotrifluoroethylene copolymer (ECTFE), and a tetrafluoroethylene-perfluorodioxol copolymer (TFE/PDD).

Here, the solution containing a hydrophobic compound is a solution of a hydrophobic compound dissolved or dispersed in a solvent, and is not limited to a homogeneous solution in which the hydrophobic compound is completely dissolved. A fluorine resin, for example, is chemically stable, and there are more application examples as a dispersion solution rather than as a homogeneous solution. The selection of a solvent may be arbitrarily made according to the kind of hydrophobic compound. Many of silane agents (functional silane agent, silylating agent, silane coupling agent) are soluble in an organic solvent. The treatment solution may be prepared using only an organic solvent, and it is possible to use a mixed solvent of an organic solvent and water.

With respect to the hydrophobic compound content of the hydrophobization treatment solution, in the case of a solution of a silane agent, the silane compound content is preferably 9 wt% or more and 66 wt% or less based on the total weight of the hydrophobization treatment solution including the silane compound and its solvent. In addition, in the case of a solution of a fluorine resin, the fluorine resin content is preferably 0.5 wt% or more and 10 wt% or less based on the total weight of the hydrophobization treatment solution including the fluorine resin and its dispersion solvent. By using a solution of such a concentration, a suitable hydrophobization treatment can be performed. Incidentally, the amount of hydrophobization treatment solution used is preferably 100 g or more and 500 g or less, more preferably 110 g or more and 300 g or less, per 100 g of the inorganic oxide.

A specific method for the hydrophobization treatment of a carrier is such that the carrier is immersed in the solution containing a hydrophobic compound described above, and subsequently the carrier is removed from the solution, then suitably washed, and dried. During the treatment, the liquid temperature of the solution may be ordinary temperature.

The hydrophobized inorganic oxide carrier is next subjected to the step of supporting a catalytic metal. This step is basically based on the general method for supporting a catalytic metal. That is, a carrier and a solution of a metal compound as a catalytic metal are brought into contact, followed by a heat treatment, thereby forming an atomic metal.

Here, as described above, there is a suitable chlorine content for the catalyst used in the present invention. As a method for producing a catalyst considering the suitable range of the chlorine content, a raw material containing a chlorine component may be used. In addition, a chlorine-free raw material is possibly used, and a chlorine component is added during the production process while adjusting the content.

A metal compound containing a chlorine component is preferably used as a raw material. When a material containing a chlorine component is used in the raw material stage, chlorine can be easily introduced into the catalyst and uniformly dispersed. Then, as a raw material containing a chlorine component, a metal compound containing chlorine as a constituent element is preferably applied.

Preferred examples of metal compounds suitable for use in the present invention include, as chlorides of platinum, platinum compounds such as chloroplatinic acid, tetraammine platinum dichloride, hexaammine platinum tetrachloride, platinum potassium, and platinum chloride. Such a platinum compound is, in the form of a solution, brought into contact with (adsorbed on) a carrier. The compound concentration of the solution is adjusted according to the supported amount of the catalytic metal.

In addition, in the present invention, metal compounds other than chlorides, in which chlorine is not the constituent element, may also be used as raw materials. That is, a metal compound that is not a chloride but contains chlorine in its solutions, such as dinitrodiamine platinum nitrate or tetraammine platinum oxalate, may also be used as a raw material. For example, in the case of a dinitrodiamine platinum nitric acid solution, when a chlorine source such as hydrochloric acid is present in the solution in an amount of 50 ppm or more in terms of chlorine, such a solution can be expected to have similar operations and effects as a solution of a chloride.

With respect to a solvent for the solution of a metal compound, because the carrier is hydrophobic in the present invention, a polar organic solvent, such as alcohol is preferably applied as the solvent for the compound solution, but it is also possible to use a mixed solvent of water and a polar organic solvent. The volume ratio of water/polar organic solvent of the mixed solvent is preferably 5 or more and 90 or less, and more preferably 40 or more and 85 or less.

By bringing the metal compound solution into contact with the hydrophobization-treated carrier, the metal compound is adsorbed on a carrier. As a method for adsorbing a solution, the carrier may be immersed in the solution, or the solution may be dropped onto the carrier. The adsorption is followed by suitable drying and a heat treatment, and thus, ions are each reduced, forming atomic platinum and metals. In addition, in the course of the heat treatment, the rearrangement of platinum atoms and the like occurs, and thus, a suitable supporting state, such as proximate support, is developed. Then, in the present invention, the chlorine content of the catalyst can be controlled by adjusting the heat treatment conditions. Heating by the heat treatment volatilizes chlorine that has been introduced in the raw material stage. When the heat treatment is excessively performed, chlorine falls below the defined content.

With respect to the heat treatment conditions, the setting of the heat treatment temperature is particularly important. When the heat treatment temperature is high, chlorine is excessively volatilized, resulting in a catalyst having a low chlorine content. Meanwhile, in the case where the heat treatment temperature is low, this makes it difficult for the reduction of platinum and the suitable supporting state to proceed. According to the present inventors' examination, as the heat treatment temperature that ensures the balance between the reduction and the ensuring of chlorine content, the temperature is set at 150°C or more and 280°C or less. In the case where this temperature range is exceeded, chlorine is much depleted, making it difficult to achieve a chlorine content within a predetermined range. Incidentally, for the adjustment of the chlorine content, the heat treatment temperature is particularly preferably 150°C or more and 250°C or less.

In addition, the heat treatment is necessarily performed in a suitable reducing atmosphere. As a suitable heat treatment atmosphere, a gas atmosphere having a hydrogen concentration of 3 vol% or more and 100 vol% or less can be mentioned. As the balance of this atmosphere gas other than hydrogen, inert gases (nitrogen, argon, etc.) are suitable. In addition, the heat treatment time is preferably 0.5 hours or more and 10 hours or less. When the time is less than 0.5 hours, the catalytic metal is not sufficiently formed, while when it is more than 10 hours, the resulting chlorine content is low even at the above heat treatment temperature.

The catalyst described above is used for reaction promotion in a water-hydrogen exchange reaction. Here, as the water-hydrogen exchange reaction (water-hydrogen isotope exchange reaction) to which the present invention is applied, reactions represented by the following formulae can be mentioned. These reactions are reactions between water (water vapor) and hydrogen gas. In the reaction, at least one of water and hydrogen gas contains a hydrogen isotope (tritium, deuterium), and isotopic hydrogen is exchanged between the two. Incidentally, in the following formulas, H represents hydrogen, T represents tritium, and D represents deuterium. In addition, V means vapor, g represents gas, and I represents liquid.

[Chemical Formula 1]
(H-T system)
$$H_2O(v)+HT(g) \rightleftarrows HTO(v)+H_2(g)$$
$$T_2O(v)+H_2(g) \rightleftarrows HTO(v)+HT(g)$$
$$T_2O(_v)+HT(g) \rightleftarrows HTO(v)+T_2(g)$$
$$H_2O(v)+T_2(g) \rightleftarrows HTO(v)+HT(g)$$

[Chemical Formula 2]
(H-D system)
$$H_2O(v)+HD(g) \rightleftarrows HDO(v)+H_2(g)$$
$$D_2O(v)+H_2(g) \rightleftarrows HDO(v)+HD(g)$$
$$D_2O(v)+HD(g) \rightleftarrows HDO(v)+D_2(g)$$
$$H_2O(v)+D_2(g) \rightleftarrows HDO(v)+HD(g)$$

[Chemical Formula 3]
(D-T system)
$$D_2O(v)+DT(g) \rightleftarrows DTO(v)+D_2(g)$$
$$T_2O(v)+D_2(g) \rightleftarrows DTO(v)+DT(g)$$
$$T_2O(v)+DT(g) \rightleftarrows DTO(v)+T_2(g)$$
$$D_2O(v)+T_2(g) \rightleftarrows DTO(v)+DT(g)$$

As can be seen from the above formulae, the water-hydrogen exchange reaction to which the present invention is applied is an equilibrium reaction (reversible reaction) and is different from an irreversible reaction, such as a burning reaction, in this respect. For example, the reaction formula of the first line of the formula of the above Chemical Formula 1 is an equilibrium reaction between a reaction between hydrogen gas (HT) containing a hydrogen isotope and water vapor ($H_2O$) (reaction that exchanges a hydrogen isotope in hydrogen gas and a hydrogen atom in water vapor) and a reaction between water vapor (HTO) containing a hydrogen isotope and hydrogen gas ($H_2$) (reaction that exchanges a hydrogen isotope in water vapor and a hydrogen atom in hydrogen gas). Therefore, the present invention is useful for hydrogen isotope separation from moisture containing a hydrogen isotope and is also applicable to hydrogen isotope separation from hydrogen gas containing a hydrogen isotope. In the equilibrium water-hydrogen exchange reaction, the catalyst according to the present invention can contribute to the progress of the reaction aimed at the equilibrium reaction rate (critical reaction rate). With respect to the reaction temperature in this isotope exchange reaction, the reaction can be allowed to proceed at relatively low temperatures and also occurs at 25°C or more and 95°C or less.

In addition, as specific cases based on the reaction formulae of Chemical Formula 2 and Chemical Formula 3, the reaction formula of Chemical Formula 2 (H-D system) is applied for the concentration or separation of the deuterium component in water. In addition, the reaction formula of Chemical Formula 3 (D-T system) can be applied for the removal of tritium from heavy water, and is a reaction to be applied, for example, for the removal of tritium by-produced in heavy water used in a heavy water reactor (heavy water moderated, heavy water cooled, pressure tube reactor (CANDU reactor) etc.). Further, although the reaction formulae of the above Chemical Formula 1 to Chemical Formula 3 show reaction formulae of two-component systems, the present invention is also useful for a three-component system.

Incidentally, in a water-hydrogen exchange reaction in the present invention, as reactions that occur in the reaction system, reactions other than the hydrogen isotope exchange reaction (one of the reactions shown by the above Chemical Formula 1 to Chemical Formula 3) may also occur. For example, with respect to tritiated water in which a hydrogen isotope has been concentrated by the isotope exchange reaction, as a reaction for concentrating and recovering the tritiated water (vapor) in liquid state, the following reaction may be caused. Such a reaction for phase change (equilibrium reaction between liquid-vapor) does not proceed under the action of the catalyst according to the present invention. However, such a complementary reaction may also be caused together with a reaction of the present invention.

[Chemical Formula 4]

(H-T system)

$$H_2O(v) + HTO(l) \rightleftarrows HTO(v) + H_2O(l)$$
$$H_2O(v) + T_2O(l) \rightleftarrows HTO(v) + HTO(l)$$
$$HTO(v) + T_2O(l) \rightleftarrows T_2O(v) + HTO(l)$$

Then, also with respect to the isotope exchange reaction of Chemical Formula 2 and Chemical Formula 3, the following complementary reactions may occur.

[Chemical Formula 5]

(H-D system)

$$H_2O(v) + HDO(l) \rightleftarrows HDO(v) + H_2O(l)$$
$$H_2O(v) + D_2O(l) \rightleftarrows HDO(v) + HDO(l)$$
$$HDO(v) + D_2O(l) \rightleftarrows D_2O(v) + HDO(l)$$

[Chemical Formula 6]

(D-T system)

$$D_2O(v) + DTO(l) \rightleftarrows DTO(v) + D_2O(l)$$
$$D_2O(v) + T_2O(l) \rightleftarrows DTO(v) + DTO(l)$$
$$DTO(v) + T_2O(l) \rightleftarrows T_2O(v) + DTO(l)$$

In a reaction method to which the catalyst for a water-hydrogen exchange reaction according to the present invention is applied, the mode of contact between reactants (moisture and hydrogen) is not particularly limited. Generally, in reactions of fluids, there are a countercurrent flow, in which fluids to react are allowed to flow in opposite directions during the reaction, and a co-current flow, in which fluids are allowed to flow in the same direction during the reaction. However, the reaction is not limited to either one in the present invention. In addition, the flow direction of the reaction fluid may be horizontal or vertical.

Then, the catalyst used in the present invention can compose a treatment device for a water-hydrogen exchange reaction. The water-hydrogen exchange reaction apparatus includes, as its reaction section, the catalyst for a water-hydrogen exchange reaction according to the present invention. In the reaction section, the introduced moisture and hydrogen are subjected to a catalytic reaction in the presence of the catalyst, and the reactants after hydrogen isotope exchange are discharged therefrom.

The water-hydrogen exchange reaction apparatus described herein includes a reaction section equipped with the catalyst described above, and, other than this, its configuration is not limited. In addition, the reaction section is indispensably equipped with the hydrophobized platinum catalyst described above, and, in other respects, its configuration is not particularly limited either. It is also possible that the catalyst described above is packed into a suitable container body to form the reaction section. In addition, it is also possible that a suitable support body (ceramic honeycomb, metal honeycomb, etc.) is coated with the catalyst described above, and such a catalyst structure is incorporated into the reaction section. As the former, a reaction section of a fixed-bed type or a fluid-bed type is applicable. In addition, the catalyst structure of the latter mode is preferably produced by coating the support body with an inorganic oxide to serve as a carrier, and then supporting platinum thereon.

In the water-hydrogen exchange reaction apparatus described herein, the number of reaction sections is not particularly limited either. Although the device may be composed of a single reaction section, the device more preferably includes a plurality of stages of reaction sections, and they are provided in an array. The hydrogen isotope exchange rate in a single reaction section is often insufficient. In such a case, rather than increasing the volume of the reaction section, it is eventually more efficient to provide several stages and treat fluids successively in the plurality of reaction sections.

In the treatment device described herein, in addition to the catalyst described above, a suitable packing may be used together. Use of a packing is particularly preferable for causing the complementary reactions described above (reactions of Chemical Formula 4 to Chemical Formula 6 aimed at phase change) and efficiently separating/extracting a hydrogen isotope. A packing is a solid substance formed/processed in a honeycomb shape, a mesh shape, a ring shape, or the like in order to expand the contact area per volume in gas-liquid contact. Examples of packings include structured packings, such as a honeycomb, and random packings, such as a wire mesh-shaped body and a ring, and they are all usable. Incidentally, as random packings, wire mesh-shaped bodies (Dixon packing, McMahon packing, etc.) and ring-shaped packings (Raschig ring, pall ring, cross ring, etc.), which are known as packings for purification and distillation, are applicable. With respect to constituent materials of a packing, those made of a metal such as stainless steel, as well as those made of a resin, a ceramic, and the like, are available.

In addition, in the case where the packing is used, the packing may be packed into a reaction section together with the catalyst (trickle bed-type reactor). In addition, it is also possible that a packed bed formed of the packing is formed, and the reaction section (catalyst layer) and the packed bed are separately arranged. With respect to the arrangement of the reaction section (catalyst layer) and the packing layer, they may be arranged in series, and it is also possible that a device having a double pipe structure is formed, and the catalyst layer and the packing layer are arranged in the outer pipe and the inner tube, respectively.

Incidentally, when the device is composed of a multistage reaction section, the number of reaction section stages directly affects the device dimension of the treatment device for treating water containing a hydrogen isotope. The catalyst described above has an improved activity and thus makes it possible to reduce the number of reaction section stages as compared with the case of applying a conventional catalyst. As a result, the downsizing of a treatment device can be achieved, and its construction cost can be suppressed.

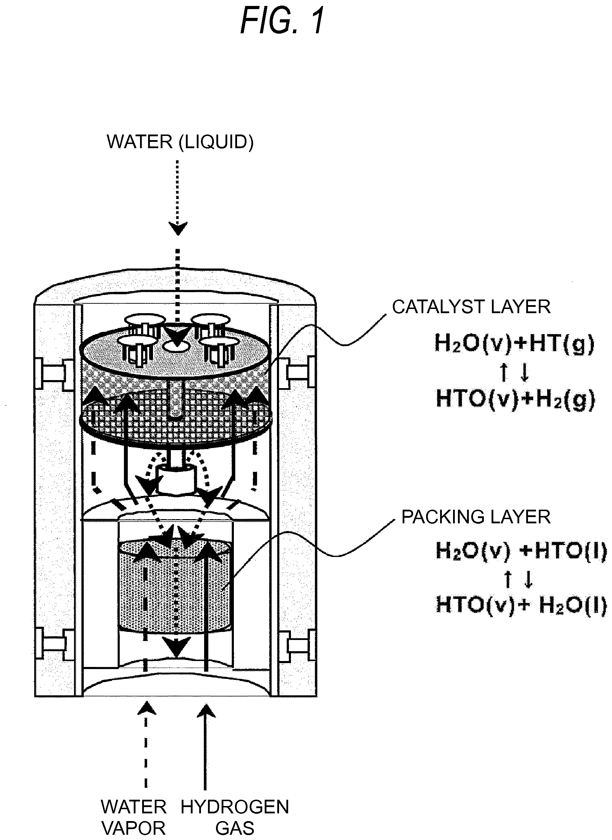

Fig. 1 is a figure regarding a tritium-containing water treatment device, which is presented as one mode of the water-hydrogen exchange reaction apparatus described herein. In this figure, a catalyst layer (reaction section) and a packing layer are combined to compose one unit. In the treatment unit of Fig. 1 regarding a water-hydrogen exchange reaction apparatus (tritium-containing water treatment device), water to be treated (tritium-containing water) is fed from above, and hydrogen gas is fed from below.

In Fig. 1, in the reaction in the catalyst layer (hydrogen exchange reaction), the reactant in water vapor. Therefore, the fed water once turns into vapor in the packing layer, then reaches the catalyst layer together with hydrogen gas, and undergoes the reaction. Then, the hydrogen isotope exchange reaction in the catalyst layer and the water vapor-water phase equilibrium reaction in the packing layer are alternately repeated, and thus, tritiated water is concentrated. The tritiated water treatment device is composed of a plurality of stages of the units of Fig. 1. Reactions repeatedly occur successively in each unit, and thus, tritium can be effectively concentrated/separated.

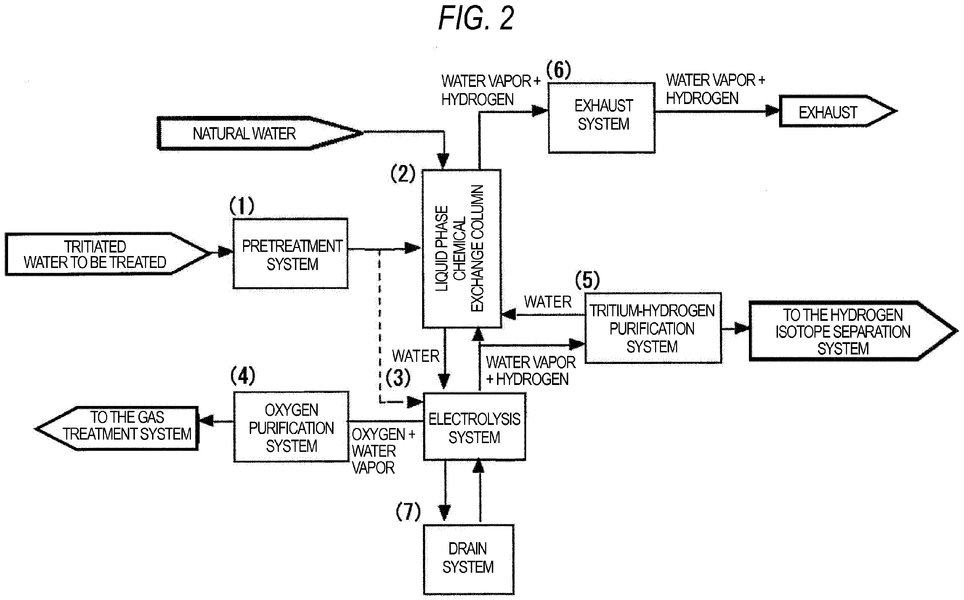

In addition, Fig. 2 schematically shows the process flow of a tritiated water treatment plant containing the tritium-containing water treatment device. In Fig. 2, a "liquid phase chemical exchange column (2) is a tritium-containing water treatment device containing the unit of Fig. 1. In this treatment plant, impurities in tritiated water are removed by a pretreatment in an ion adsorption column or the like in a pretreatment system (1), and then, as described above, the tritiated water is concentrated in the liquid phase chemical exchange column (2). Incidentally, in this flow, the tritium-containing water to be treated is supplied in the middle of the column. Then, water (natural water) is supplied from the top of the column. This is for reducing tritium in hydrogen and water vapor exhausted from the column.

The tritiated water concentrated in the liquid phase chemical exchange column (2) is electrolyzed in an electrolysis system (3). As a result of the electrolysis of the concentrated tritium-containing water, hydrogen-like tritium gas containing tritium and oxygen are generated. Oxygen is unnecessary in this process and thus should be exhausted, but tritium-containing water vapor is also present in oxygen. Thus, for its removal, oxygen is treated in an oxygen purification system (4) and exhausted into the gas treatment system. Meanwhile, the hydrogen-like tritium gas generated in the electrolysis system (3) is partially sent to a tritium-hydrogen purification system (5), and the rest is returned to the liquid phase chemical exchange column (2).

The hydrogen-like tritium gas generated in the electrolysis system (3) is eventually separated into pure tritium gas and tritium-free hydrogen in the hydrogen isotope isolation system. Here, because the hydrogen isotope isolation system is operated at an extremely low temperature, in order for impurities, such as water vapor, to not be contained in the hydrogen gas fed to the hydrogen isotope isolation system, the tritium-hydrogen purification system (5) plays a rule in separating them. In the tritium-hydrogen purification system (5), a palladium metal membrane that selectively allows for the passage of only hydrogen is used.

Incidentally, hydrogen having the tritium concentration reduced in the liquid phase chemical exchange column (2) is discharged from an exhaust system. However, before exhaust from the exhaust system (6), the exhaust gas is diluted with nitrogen or the like in order to avoid the danger of explosion. Then, considering the danger of possible explosion, a flame arrester is provided in order to prevent the flame from spreading to the liquid phase chemical exchange column, where a large amount of hydrogen is handled. Further, in the process of Fig. 2, considering maintenance, a drain system (7), in which the tritiated water in the system is drained and temporarily stored, is also provided.

In addition, this process has a plurality of instruments handling high-concentration tritium. Let alone the liquid phase chemical exchange column (2), which is the main device, other parts also have the risk of leakage of trace tritium. Thus, in this process, for the electrolysis system (3), the oxygen purification system (4), and the tritium-hydrogen purification system (5), a casing covering the facilities (preferably equipped with a ventilation function) are installed for secondary enclosure.

Advantageous Effects of the Invention

As described above, the catalyst used for a water-hydrogen exchange reaction of the present invention applies an inorganic oxide carrier that has been suitably hydrophobization-treated. The catalyst can be continuously used for a long period of time without concern about damage to the carrier. The catalyst exhibits an excellent activity as compared with a conventional catalyst for a water-hydrogen exchange reaction, and has high capability of separating deuterium (D) and tritium (T), which are hydrogen isotopes.

As applications where the catalyst used for a water-hydrogen exchange reaction of the invention can be expected to be applicable, the purification treatment of water containing radioactive substances including hydrogen isotopes (deuterium, tritium) generated in nuclear reactor facilities and the like, the purification of heavy water in heavy water production devices, and like applications are possible. A treatment device for efficiently treating such waste water is described herein.

Brief Description of the Drawings

Fig. 1 shows the configuration of a reaction unit composed of a reaction section and a packing layer in a tritium-containing water treatment device according to one mode of the present invention.
Fig. 2 illustrates a process flow in a tritium-containing water treatment plant including a tritium-containing water treatment device according to one mode of the present invention.
Fig. 3 shows the pore distribution of Test No. 5 of this embodiment.

Mode for Carrying Out the Invention

Hereinafter, best modes for carrying out the present invention will be described. Various inorganic oxide carriers were prepared, and the hydrophobization of carriers and the supporting of catalytic metals were performed under various conditions, and a plurality of catalysts were produced. Then, their activities were evaluated.

[Hydrophobization Treatment of Carrier]

As inorganic oxide carriers, silica (pore size: 3 nm, 6 nm, 10 nm, 30 nm, 50 nm, 100 nm, 200 nm, 250 nm; nine kinds), alumina (pore size: 10 nm), zirconia (pore size: 9 nm), and titania (pore size: 7 nm) were prepared. These inorganic oxide carriers are in pellet form (dimension: about 2 to 4 mm).

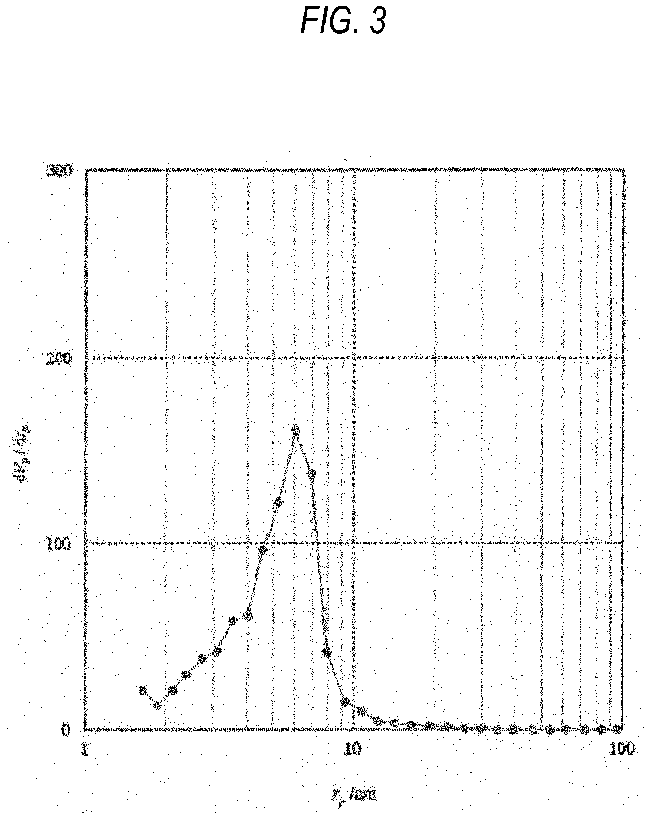

Incidentally, the pore size of the inorganic oxide carrier was measured by a nitrogen gas adsorption process. The inorganic oxide carrier was ground in an agate mortar, and 0.06 g of the resulting sample powder was collected in a glass tube for measurement. Next, in a glass tube of an automatic specific surface area/pore distribution measuring device (BELSORP-mini manufactured by BEL Corp.), a stainless steel tube for supplying helium gas was placed such that helium gas would come in direct contact with the sample powder. Helium gas was flowed in at 30 ml/min, and a pretreatment was performed at 305°C for 2 hours. While the pretreated sample powder was in the glass tube, the mass of the sample was measured. Subsequently, the glass tube was attached to the device, and the pore distribution was measured at the liquid nitrogen temperature. The average pore size was defined as the pore size. This method is generally called a BET specific surface area. From the obtained adsorption/desorption isotherm data and sample weight, a graph of the specific surface area and the pore distribution was obtained. Fig. 3 is a diagram showing the pore distribution of Test No. 5 in Table 1 described below.

100 g of the above inorganic oxide carrier was prepared and treated with a solution containing a hydrophobic compound. As hydrophobic compounds, 17 kinds of silane-based agents (functional silane agent, silane coupling agent) and nine kinds of fluorine resins were used. As the treatment solution, in the case of a silane-based compound, a mixed solution obtained by mixing, with 100 g of the inorganic oxide carrier, 20 g of a silane-based compound, 50 g of ethanol, and 50 g of pure water was used. In addition, in the case of a fluorine resin, a dispersion solution obtained by mixing, with 100 g of the inorganic oxide carrier, 10 g of a fluorine resin and 100 g of a fluorine solvent (heptacosafluorotributylamine) was used.

In the hydrophobization treatment, the inorganic oxide carrier was washed with pure water and dried, and then the carrier was immersed in the solution containing a hydrophobic compound. The immersion was performed for 12 hours, and the treatment was performed at room temperature. Subsequently, the carrier was removed, washed with pure water, and then dried at 200°C.

[Supporting of Catalytic Metal]

Next, a catalytic metal was supported to the hydrophobization-treated carrier. As catalytic metals, platinum, Palladium (reference), and ruthenium (reference), as well as a platinum-ruthenium alloy (Pt:Ru = 5:5) (reference) and a platinum-palladium alloy (Pt:Pd = 3:7, 5:5, 7:3; three kinds), (reference), were supported. As metal compound solutions of these catalytic metals, a chloroplatinic acid ethanol solution, a ruthenium chloride solution (solvent: ethanol), and a palladium chloride solution (solvent: ethanol) were used. The supporting of a catalytic metal was performed by immersing the hydrophobization-treated carrier in the metal compound solution. Subsequently, the solvent was evaporated by a rotary evaporator, followed by a heat treatment.

In the supporting of a catalytic metal, the concentration of the metal compound solution was adjusted, thereby producing a plurality of catalysts having various amount of platinum supporteds. In addition, in the production of an alloy catalyst, the concentration was adjusted while mixing a metal compound solution of each metal.

The heat treatment temperature as set at 150°C, 250°C, 280°C, 300°C, and 350°C. In addition, as the heat treatment atmosphere, 100 vol% hydrogen, 3 vol% hydrogen, 10 vol% hydrogen, 30 vol% hydrogen, 70 vol% hydrogen (all nitrogen balance), and 100% nitrogen were applied. In the heat treatment, the carrier was refluxed for 2 hours while being heated to the above temperature.

With respect to the various catalysts produced, the average particle size, D20 particle diameter, and D90 particle diameter of the catalyst particles and the chlorine content were measured. The measurement of the particle size of catalyst particles was performed by a method in which the major axes and minor axes of arbitrary 50 particles from a TEM photograph were measured and averaged. The measurement of the chlorine content was performed using a coulometry chlorine analyzer (TOX-2100H manufactured by Mitsubishi Chemical Analytech Co., Ltd.). Each catalyst was thoroughly ground in an agate mortar and pulverized. 15 mg of the powder was weighed and heated to 1,000°C in an Ar/O2 (1:1) mixed gas stream, and the amount of chlorine in the generated chlorine-containing gas was quantified. This measurement was performed three times, and the average of the results was converted into a value per 1 mass% of the catalytic metal. For example, when 500 ppm of chlorine is measured from a catalyst containing 1 mass% platinum, the content is 500 ppm, while when 600 ppm of chlorine is measured from a catalyst containing 3 mass% platinum, 600 ppm is divided by 3, and the content is 200 ppm per 1 mass%.

Then, the catalytic activity of each catalyst was evaluated. In this activity evaluation test, the treatment object is tritiated water. In the test, first, tritiated water (concentration: about 50,000 Bq/cc) was brought into contact with 1 NL of tritium-free light hydrogen gas (H2) per minute in a humidity control column, producing saturated water vapor. Then, the water vapor was subjected to a co-current flow reaction at 70°C in a reactor (20 mm in inner diameter) containing 5 cc of the catalyst, and the transition rate of tritium from water vapor to hydrogen was evaluated as isotope exchange capability (catalytic activity).

Defining the tritiated water vapor concentration at the reactor inlet as (HTO)in and the tritiated water vapor concentration at the outlet as (HTO)out, the transition rate was calculated by the following equation.

[Equation 1]

$$\text{Transition rate (activity)} = ((HTO)_{in} - (HTO)_{out}) / (HTO)_{in}$$

Here, the water-hydrogen isotope exchange reaction, which is the main object in this embodiment, is a reaction of the following equation (the reaction formula of the first line of Chemical Formula 1). This reaction is also an equilibrium reaction. However, the present inventors estimate that the equilibrium reaction rate of this reaction in the test device under the test conditions herein is about 40%. In addition, for the activity evaluation of the catalysts of this embodiment, the activity of a conventional platinum catalyst using a hydrophobic polymer carrier (trade name: Kogel, manufactured by Shoko Co., Ltd. make) had been previously evaluated under the same conditions. The activity of the conventional example was 24.5%. Table 1 and Table 2 show the result of physical property measurement and the result of catalytic activity evaluation of each catalyst.

[Chemical Formula 7]  $H_2O(v)+HT(g) \rightleftarrows HTO(v)+H_2(g)$

[Table 1]

| Test No. | Carrier | | Catalytic metal | | Hydrophobization treatment | Heat treatment conditions | | Catalytic metal | | | Chlorine concentration (ppm) | Activity (%) |
|---|---|---|---|---|---|---|---|---|---|---|---|---|
| | Kind | Pore size (nm) | Kind | Supported amount (wt%) | Hydrophobic compound | Atmosphere | Temperature (°C) | Average particle size (nm) | $D_{20}$ (nm) | $D_{90}$ (nm) | | |
| 1 | $SiO_2$ | 100 | Pt | 1 | Methyltrimethoxysilane | 100%$H_2$ | 200 | 13 | 6 | 18 | 360 | 34 |
| 2 | $Al_2O_3$ | 10 | | | | | | 8 | 1 | 14 | 540 | 34 |
| 3 | $ZrO_2$ | 9 | | | | | | 7 | 3 | 13 | 280 | 32 |
| 4 | $TiO_2$ | 7 | | | | | | 7 | 2 | 12 | 340 | 33 |
| 5 | $SiO_2$ | 6 | Pt | 1 | Methyltrimethoxysilane | 100%$H_2$ | 200 | 7 | 4 | 10 | 390 | 30 |
| 6 | | 10 | | | | | | 7 | 4 | 11 | 310 | 31 |
| 7 | | 30 | | | | | | 9 | 4 | 13 | 290 | 35 |
| 8 | | 50 | | | | | | 10 | 5 | 16 | 330 | 38 |
| 9 | | 100 | | | | | | 12 | 5 | 17 | 300 | 40 |
| 10 | | 200 | | | | | | 13 | 6 | 18 | 360 | 34 |
| 11* | $SiO_2$ | 80 | Pt-Ru (5:5) | 1 | Methyltrimethoxysilane | 100%$H_2$ | 200 | 9 | 5 | 14 | 500 | 33 |
| 12* | | | Pt-Pd (3:7) | | | | | 8 | 5 | 15 | 300 | 30 |
| 13* | | | Pt-Pd (5:5) | | | | | 9 | 4 | 14 | 350 | 34 |
| 14* | | | Pt-Pd (3:7) | | | | | 8 | 3 | 15 | 430 | 35 |
| 15* | | | Pd | | | | | 11 | 6 | 20 | 440 | 10 |
| 16* | | | Ru | | | | | 5 | 3 | 17 | 550 | 7 |

EP 3 189 894 B1

11

(continued)

| Test No. | Carrier | | Catalytic metal | | Hydrophobization treatment | Heat treatment conditions | | Catalytic metal | | | Chlorine concentration (ppm) | Activity (%) |
|---|---|---|---|---|---|---|---|---|---|---|---|---|
| | Kind | Pore size (nm) | Kind | Supported amount (wt%) | Hydrophobic compound | Atmosphere | Temperature (°C) | Average particle size (nm) | $D_{20}$ (nm) | $D_{90}$ (nm) | | |
| 17 | $SiO_2$ | 80 | Pt | 0.1 | Methyltrimethoxysilane | 100%$H_2$ | 200 | 4 | 3 | 7 | 200 | 5 |
| 18 | | | | 0.3 | | | | 9 | 3 | 10 | 240 | 30 |
| 19 | | | | 5 | | | | 13 | 4 | 19 | 320 | 39 |
| 20 | | | | 10 | | | | 18 | 5 | 20 | 340 | 40 |
| *not according to the invention | | | | | | | | | | | | |

[Table 2]

| Test No. | Carrier | | Catalytic metal | | Hydrophobization treatment | Heat treatment conditions | | Catalytic metal | | | Chlorine concentration (ppm) | Activity (%) |
|---|---|---|---|---|---|---|---|---|---|---|---|---|
| | Kind | Pore size (nm) | Kind | Supported amount (wt%) | Hydrophobic compound | Atmosphere | Temperature (°C) | Average particle size (nm) | $D_{20}$ (nm) | $D_{90}$ (nm) | | |
| 21* | | | | | No hydrophobization treatment | | | 7 | 2 | 16 | 400 | 3 |
| 22 | | | | | Methyltrimethoxysilane + dimethyldimethoxysilane | | | 8 | 4 | 15 | 380 | 38 |
| 23 | | | | | Dimethyldimethoxysilane | | | 10 | 3 | 17 | 330 | 37 |
| 24 | | | | | Methyltriethoxysilane | | | 8 | 3 | 19 | 340 | 39 |
| 25 | | | | | Phenyltrimethoxysilane | | | 9 | 4 | 18 | 300 | 35 |
| 26 | | | | | Hexyltrimethoxysilane | | | 10 | 2 | 20 | 430 | 33 |
| 27 | | | | | Hexamethyldisilazane | | | 7 | 3 | 19 | 330 | 34 |
| 28 | | | | | Vinyltriethoxysilane | | | 8 | 2 | 19 | 320 | 38 |
| 29 | | | | | 2-(3,4-Epoxycyclohexyl)ethyltrimethoxysilane | | | 10 | 3 | 16 | 300 | 39 |
| 30 | | | | | 3-Glycidoxypropylmethyldimethoxysilane | | | 8 | 4 | 16 | 360 | 38 |
| 31 | | | | | p-Styryltrimethoxysilane | | | 8 | 2 | 17 | 370 | 38 |
| 32 | | | | | 3-Methacryloxypropylmethyldimethoxysilane | | | 7 | 4 | 15 | 360 | 32 |
| 33 | | | | | 3-Acryloxypropyltrimethoxysilane | | | 9 | 3 | 17 | 330 | 35 |
| 34 | | | | | N-2-(aminoethyl)-3-aminopropylmethyldimethoxysilane | | | 7 | 2 | 17 | 290 | 37 |
| 35 | $SiO_2$ | 80 | Pt | 1 | Tris(trimethoxysilylpropyl)isocyanurate | 100%$H_2$ | 200 | 7 | 3 | 19 | 430 | 39 |

EP 3 189 894 B1

| Test No. | Carrier | | Catalytic metal | | Hydrophobization treatment | Heat treatment conditions | | Catalytic metal | | | Chlorine concentration (ppm) | Activity (%) |
|---|---|---|---|---|---|---|---|---|---|---|---|---|
| | Kind | Pore size (nm) | Kind | Supported amount (wt%) | Hydrophobic compound | Atmosphere | Temperature (°C) | Average particle size (nm) | $D_{20}$ (nm) | $D_{90}$ (nm) | | |
| 36 | | | | | 3-Ureidopropyltrialkoxysilane | | | 9 | 3 | 16 | 330 | 35 |
| 37 | | | | | 3-Mercaptopropylmethyldimethoxysilane | | | 9 | 3 | 15 | 200 | 38 |
| 38 | | | | | Bis(triethoxysilylpropyl)tetrasulfide | | | 10 | 4 | 16 | 450 | 39 |
| 39 | | | | | 3-Isocyanatepropyltriethoxysilane | | | 8 | 2 | 15 | 400 | 38 |
| 40 | | | | | PTFE | | | 8 | 3 | 16 | 300 | 35 |
| 41 | | | | | PCTFE | | | 7 | 3 | 17 | 440 | 32 |
| 42 | | | | | PVDF | | | 10 | 2 | 19 | 500 | 34 |
| 43 | | | | | PVF | | | 9 | 3 | 19 | 430 | 33 |
| 44 | | | | | PFA copolymer | | | 7 | 4 | 17 | 360 | 36 |
| 45 | | | | | FEP copolymer | | | 7 | 4 | 15 | 370 | 32 |
| 46 | | | | | ETFE copolymer | | | 7 | 3 | 17 | 330 | 32 |
| 47 | | | | | ECTFE copolymer | | | 9 | 2 | 16 | 400 | 39 |
| 48 | | | | | TFE/PDD copolymer | | | 9 | 3 | 17 | 200 | 35 |
| 49* | $SiO_2$ | 80 | Pt | 1 | Methyltrimethoxysilane | $N_2$ | 200 | 7 | 3 | 13 | 1500 | 18 |

EP 3 189 894 B1

| Test No. | Carrier | | Catalytic metal | | Hydrophobization treatment | Heat treatment conditions | | Catalytic metal | | | Chlorine concentration (ppm) | Activity (%) |
|---|---|---|---|---|---|---|---|---|---|---|---|---|
| | Kind | Pore size (nm) | Kind | Supported amount (wt%) | Hydrophobic compound | Atmosphere | Temperature (°C) | Average particle size (nm) | $D_{20}$ (nm) | $D_{90}$ (nm) | | |
| 50 | | | | | | $3\%H_2$ | | 8 | 3 | 15 | 800 | 35 |
| 51 | | | | | | $10\%H_2$ | | 10 | 4 | 16 | 650 | 36 |
| 52 | | | | | | $30\%H_2$ | | 9 | 4 | 14 | 350 | 39 |
| 53 | | | | | | $70\%H_2$ | | 10 | 5 | 15 | 330 | 38 |
| 54 | | | | | | $100\%H_2$ | | 12 | 5 | 19 | 300 | 40 |
| 55* | $SiO_2$ | 80 | Pt | 1 | Methyltrimethoxysilane | $100\%H_2$ | 150 | 6 | 3 | 13 | 1300 | 20 |
| 56 | | | | | | | 250 | 13 | 6 | 20 | 290 | 39 |
| 57 | | | | | | | 280 | 14 | 7 | 20 | 150 | 31 |
| 58* | | | | | | | 300 | 14 | 7 | 20 | 20 | 26 |
| 59* | | | | | | | 350 | 15 | 8 | 21 | 10 | 20 |
| *not according to the invention | | | | | | | | | | | | |

EP 3 189 894 B1

From Table 1 and Table 2, it can be seen that catalysts in this embodiment, in which the inorganic oxide carrier is suitably hydrophobization-treated, and platinum is supported, have suitable activities. By examining these results in further detail, the following can be confirmed.

The kind of inorganic oxide to serve as a carrier is not limited, and effective catalysts can be produced from any of silica, alumina, zirconia, and titania (Test Nos. 1 to 4). In addition, with respect to the pore size of the inorganic oxide carrier, within the test range herein (6 nm or more and 200 nm or less), the catalysts all have excellent activities (Test Nos. 5 to 10).

As a catalytic metal to be supported, it can be observed that the presence of platinum is indispensable. In Test Nos. 15 and 16, catalysts supporting only palladium and only ruthenium, respectively, were produced, but they do not exhibit a sufficient activity. In these catalysts, although the chlorine concentration is within a suitable range, the activity is insufficient, showing that the kind of metal of a catalytic metal is also a major factor in a water-hydrogen exchange reaction. However, platinum should just be present, and palladium and ruthenium also provide excellent activities when alloyed with platinum (Test Nos. 11 to 14). In addition, with respect to the amount of platinum supported, 0.3 mass% or more is suitable (Test Nos. 18 to 20).

It can be seen that as hydrophobic compounds for use in a hydrophobization treatment, a wide range of compounds can be used (Test Nos. 22 to 48). Effective organic silane-based compounds also range from low-molecular-weight compounds, such as methylmethoxysilane, to silane compounds having a relatively high molecular weight. It is also possible to use a mixture of two kinds of silane compounds (Test No. 22). In addition, even a polymer, such as a fluorine resin, can render a catalyst hydrophobic and provide the catalyst with an excellent activity. Then, this hydrophobization treatment is an indispensable treatment for a catalyst carrier for a water-hydrogen exchange reaction. The catalyst without this treatment has little activity (Test No. 21).

Further, in this embodiment, it can be seen that the catalytic activity is affected by the chlorine content of the catalyst, and the chlorine content varies depending on the heat treatment conditions in the catalyst manufacturing process. The heat treatment in the catalyst manufacturing process is a reduction treatment. From the results of Tests Nos. 49 to 59, in the case where the heat treatment is not performed in a suitable reducing atmosphere containing hydrogen, and in the case where the heat treatment temperature is low, a large amount of chlorine derived from the raw material remains (Test Nos. 49, 55). In addition, when the heat treatment temperature is as high as 300°C or more, chlorine is removed more than necessary, resulting in a low chlorine content (Test Nos. 58, 59). It has been confirmed that these catalysts are inferior in activity, and it can be seen that in the case of a catalyst for a water-hydrogen exchange reaction, the catalyst has a suitable chlorine content.

Incidentally, in this embodiment, the hydrophobization-treated catalysts (catalysts excluding the catalyst of Test No. 21) all floated when placed in water. This can be regarded as the result of hydrophobization. Thus, the present inventors studied whether there would be any difference in the degree of hydrophobization and the catalytic activity depending on the conditions of the hydrophobization treatment.

In this complementary test examination, first, in Test No. 10, the hydrophobization treatment was performed with the same carrier, while the concentration of the methyltrimethoxysilane solution for used in the hydrophobization treatment was varied. Subsequently, a catalytic metal was supported under the same conditions as in Test No. 10, thereby producing catalyst.

Then, after the catalyst production, the contact angle with water was measured. In the measurement of a contact angle, each catalyst was pulverized in an agate mortar and then sieved to give a catalyst powder having a particle size of 10 μm or more and 30 μm or less. The catalyst powder was accumulated on a glass cell (2 cm sq., 0.2 mm deep) used in X-ray diffraction, and another glass plate was pressed thereon to flatten the powder. The accumulation/packing of a pulverized catalyst powder onto a glass cell is performed in accordance with JIS K 0131:1996 (General Rules for X-Ray Diffraction Analysis). Then, 0.35 μL of pure water was dropped on the flattened catalyst powder, and the contact angle of the water drop was measured. After the measurement of a contact angle, activity evaluation was performed in the same manner as above.

Incidentally, the above contact angle measurement method performed in this embodiment is a method that the present inventors introduced for the unusual requirement to measure the contact angle of a catalyst, which is usually in the form of a fine powder. The suitable condition range for the contact angle measurement method is as follows. As a guideline for pulverization, a catalyst powder is made to have a particle size of 10 μm or more and 30 μm or less. Then, the powder is flattened, and water is dropped thereon. In addition, at the time of flattening, the glass place was lightly pressed to eliminate any level difference between the glass cell and the powder part, and flattening was performed while removing excess powder.

In addition, it is believed that the contact angle of a catalyst measured in this embodiment is affected not only by the amount of the hydrophobic compound (silane) used, but also by the physical properties of the inorganic oxide carrier to be hydrophobization-treated. Thus, the contact angle measurement was also performed on the catalysts of Test Nos. 5 to 10 using silica having different pore sizes. The measurement results are shown in Table 3. Table 3 also shows the measurement result from the catalyst of Test No. 21 that was not hydrophobization-treated.

[Table 3]

| Test No. | Pore size (nm) | Hydrophobization treatment | | Contact angle | Activity (%) |
|---|---|---|---|---|---|
| | | Hydrophobic compound | Amount of dissolution[*1][*2] | | |
| 60 | 200 | Methyltrimethoxysilane | 10 g | 40° | 29 |
| 61 | | | 20 g | 55° | 34 |
| 10 | | | 40 g | 90° | 38 |
| 62 | | | 100 g | 150° | 39 |
| 63 | | | 200 g | 155° | 38 |
| 5 | 6 | | 40 g | 150° | 30 |
| 6 | 10 | | | 160° | 31 |
| 7 | 30 | | | 170° | 35 |
| 8 | 50 | | | 150° | 38 |
| 9 | 100 | | | 90° | 40 |
| 10 | 200 | | | 55° | 34 |
| 21* | 200 | No hydrophobization treatment | - | 0° | 3 |

*1: The amount of dissolution per 100 g of silica
*2: Dissolved in a solvent of 50 g of ethanol + 50 g of water
*not according to the invention

The catalysts produced in this examination (Test Nos. 60 to 63) also floated in water. However, there were differences in the contact angle with water in the ground state as above. It was confirmed that the state of hydrophobization can be more precisely evaluated.

From the measurement results from Test Nos. 10 and 60 to 63, the contact angle varies with the amount of dissolution of the hydrophobic compound. In addition, with reference to the catalysts of Test Nos. 5 to 10, it seems that the smaller the pore size, the greater the contact angle. However, in terms of activity, the activities of the catalysts evaluated herein can all be regarded excellent. Among them, the activity of Test No. 60 (contact angle: 40°) is lowest, but the difference is tiny in other respects. Incidentally, the contact angle of the catalyst of Test No. 21 was 0°. This is because water dropped on the flattened catalyst penetrated into the catalyst.

As a result of consideration based on the evaluation results shown in Table 3, it can be estimated that hydrophobization is an indispensable treatment, and the contact angle is associated with the degree of hydrophobization. However, placing the criteria on the activity, which is the final purpose, the present inventors believe that in defining the composition of the catalyst, the contact angle is not as important as the chlorine content described above. However, if a suitable range is to be given to the contact angle, the contact angle is preferably 50° or more and 170° or less, and more preferably 55° or more and 170° or less.

As a result of examination of the activity evaluation of the catalysts produced in this embodiment examined above, most of suitable catalysts in which a hydrophobization-treated inorganic oxide carrier was used, and platinum was indispensably supported, had activities of more than 30%. In addition, under some production conditions, an activity of 40% was exhibited, which can be almost approximated to the equilibrium reaction rate. In contrast, the activity of the platinum catalyst using a conventional hydrophobic polymer carrier (Kogel) was 24.5% as described above. Accordingly, it can be said that the catalyst according to this embodiment exhibits an activity 5% or more higher than in conventional art.

With respect to the difference in activity from conventional art, it is thoughtless to lowly evaluate the difference as "merely a few percent". In a treatment device for a water-hydrogen exchange reaction to which the present invention is applied (e.g., tritium separation treatment device from tritium-containing water), the device is supposed to include several stages of catalyst-equipped reaction sections. The isotope separation effect caused by the provision of several stages is exerted with the number of stages serving as an index. As a simple calculation example, with respect to a treatment device including 30 stages of catalyst reaction sections having an activity of 30%, in order to compose a device having the equal treatment capacity using a catalyst reaction section having an activity of 25%, 37 or more stages are necessary. Here, for a device that handles tritium-containing water, which is a radioactive substance, fastness considering radioactivity is required, and thus high-spec constituent materials and building structures are required. Accordingly, even the addition of about seven stages results in a dramatic increase in the device cost. Also from such a realistic point of view, the superiority of the catalyst according to the present invention can be recognized.

Industrial Applicability

In the catalyst used for a water-hydrogen exchange reaction according to the present invention, a decrease in the catalytic performance in the case of continuous use for a long period of time is suppressed. In addition, the catalyst used in the invention is useful in separating and removing tritium (3H) from waste water discharged from a nuclear power plant.

**Claims**

1. Use of a catalyst for a water-hydrogen exchange reaction between moisture and hydrogen, in which moisture and hydrogen, at least one of which contains a hydrogen isotope, are allowed to react to cause hydrogen isotope exchange at 25°C or more and 95°C or less,
   wherein the catalyst comprises a catalytic metal supported on a carrier formed of an inorganic oxide, wherein

   the carrier is formed of an inorganic oxide that has a hydrophobic compound bound to a surface of the inorganic oxide and has been rendered hydrophobic,
   the catalytic metal consists of platinum, and the chlorine content per 1 mass% of the amount of platinum supported is 25 ppm or more and 1,000 ppm or less based on the total mass of the catalyst.

2. The use of the catalyst for a water-hydrogen exchange reaction according to claim 1, wherein the hydrophobic compound bound to the inorganic oxide surface is a hydrophobic compound containing at least one of an organic silane compound and a fluorine resin compound.

3. The use of the catalyst for a water-hydrogen exchange reaction according to claim 2, wherein the organic silane compound bound to the inorganic oxide surface is a silane coupling agent having at least one of a vinyl group, an epoxy group, a styryl group, a methacrylic group, an acrylic group, an amino group, an isocyanurate group, a ureido group, a mercapto group, a sulfide group, and an isocyanate group or wherein the fluorine resin compound bound to the inorganic oxide surface is at least one of polytetrafluoroethylene (PTFE), polychlorotrifluoroethylene (PCTFE), polyvinylidene fluoride (PVDF), polyvinyl fluoride (PVF), a tetrafluoroethylene-perfluoroalkyl vinyl ether copolymer (PFA), a tetrafluoroethylene-hexafluoropropylene copolymer (FEP), an ethylene-tetrafluoroethylene copolymer (ETFE), an ethylene-chlorotrifluoroethylene copolymer (ECTFE), and a tetrafluoroethylene-perfluorodioxol copolymer (TFE/PDD).

4. The use of the catalyst for a water-hydrogen exchange reaction according to any of claims 1 to 3, wherein the amount of platinum supported is 0.3 mass% or more based on the total mass of the catalyst and/or wherein the inorganic oxide forming the carrier contains at least one of alumina, silica, zeolite, zirconia, and titania.

5. A water-hydrogen exchange reaction method for a water-hydrogen exchange reaction between moisture and hydrogen, in which moisture and hydrogen, at least one of which contains a hydrogen isotope, are allowed to react to cause hydrogen isotope exchange at 25°C or more and 95°C or less, wherein the moisture and the hydrogen are allowed to react in the presence of a catalyst for a water-hydrogen exchange reaction,
   wherein the catalyst comprises a catalytic metal supported on a carrier formed of an inorganic oxide, wherein

   the carrier is formed of an inorganic oxide that has a hydrophobic compound bound to a surface of the inorganic oxide and has been rendered hydrophobic,
   the catalytic metal consists of platinum, and the chlorine content per 1 mass% of the amount of platinum supported is 25 ppm or more and 1,000 ppm or less based on the total mass of the catalyst.

6. The water-hydrogen exchange reaction method according to claim 5, wherein the hydrophobic compound bound to the inorganic oxide surface of the catalysts' carrier is a hydrophobic compound containing at least one of an organic silane compound and a fluorine resin compound.

7. The water-hydrogen exchange reaction method according to claim 6, wherein the organic silane compound bound to the inorganic oxide surface is a silane coupling agent having at least one of a vinyl group, an epoxy group, a styryl group, a methacrylic group, an acrylic group, an amino group, an isocyanurate group, a ureido group, a mercapto group, a sulfide group, and an isocyanate group or wherein the fluorine resin compound bound to the inorganic oxide surface is at least one of polytetrafluoroethylene (PTFE), polychlorotrifluoroethylene (PCTFE), polyvinylidene fluoride (PVDF), polyvinyl fluoride (PVF), a tetrafluoroethylene-perfluoroalkyl vinyl ether copolymer (PFA), a tetrafluoroethylene-hexafluoropropylene copolymer (FEP), an ethylene-tetrafluoroethylene copolymer (ETFE), an ethylene-chlorotrifluoroethylene copolymer (ECTFE), and a tetrafluoroethylene-perfluorodioxol copolymer (TFE/PDD).

8. The water-hydrogen exchange reaction method according to any of claims 5 to 7,
wherein the amount of platinum supported on the catalysts' carrier is 0.3 mass% or more based on the total mass of the catalyst and/or wherein the inorganic oxide forming the carrier contains at least one of alumina, silica, zeolite, zirconia, and titania.

**Patentansprüche**

1. Verwendung eines Katalysators für eine Wasser-Wasserstoff-Austauschreaktion zwischen Feuchtigkeit und Wasserstoff, in der Feuchtigkeit und Wasserstoff, von denen mindestens eines ein Wasserstoffisotop enthält, reagieren können, um einen Wasserstoffisotopen-Austausch bei 25°C oder mehr und 95°C oder weniger zu bewirken, wobei der Katalysator ein katalytisches Metall umfasst, das auf einem Träger, der aus einem anorganischen Oxid gebildet ist, geträgert ist, wobei

der Träger aus einem anorganischen Oxid gebildet ist, das eine hydrophobe Verbindung aufweist, die an eine Oberfläche des anorganischen Oxids gebunden ist, und hydrophob gemacht wurde, das katalytische Metall aus Platin besteht, und der Chlorgehalt pro 1 Massen-% der Menge von geträgertem Platin 25 ppm oder mehr und 1000 ppm oder weniger ist basierend auf der Gesamtmasse des Katalysators.

2. Verwendung des Katalysators für eine Wasser-Wasserstoff-Austauschreaktion nach Anspruch 1, wobei die hydrophobe Verbindung, die an die anorganische Oxidoberfläche gebunden ist, eine hydrophobe Verbindung ist, die mindestens eine von einer organischen Silanverbindung und einer Fluorharzverbindung enthält.

3. Verwendung des Katalysators für eine Wasser-Wasserstoff-Austauschreaktion nach Anspruch 2, wobei die organische Silanverbindung, die an die anorganische Oxidoberfläche gebunden ist, ein Silankupplungsmittel mit mindestens einer von einer Vinylgruppe, einer Epoxygruppe, einer Styrylgruppe, einer Methacrylgruppe, einer Acrylgruppe, einer Aminogruppe, einer Isocyanuratgruppe, einer Ureidogruppe, einer Mercaptogruppe, einer Sulfidgruppe und einer Isocyanatgruppe ist oder wobei die Fluorharzverbindung, die an die anorganische Oxidoberfläche gebunden ist, mindestens eines von Polytetrafluorethylen (PTFE), Polychlortrifluorethylen (PCTFE), Polyvinylidenfluorid (PVDF), Polyvinylfluorid (PVF), einem Tetrafluorethylenperfluoralkylvinylether-Copolymer (PFA), einem Tetrafluorethylen-hexafluorpropylen-Copolymer (FEP), einem Ethylen-tetrafluorethylen-Copolymer (ETFE), einem Ethylenchlortrifluorethylen-Copolymer (ECTFE) und einem Tetrafluorethylen-perfluordioxol-Copolymer (TFE/PDD) ist.

4. Verwendung des Katalysators für eine Wasser-Wasserstoff-Austauschreaktion nach einem der Ansprüche 1 bis 3, wobei die Menge an geträgertem Platin 0,3 Massen-% oder mehr ist, basierend auf der Gesamtmasse des Katalysators und/oder wobei das anorganische Oxid, das den Träger bildet, mindestens eines von Aluminiumoxid, Siliciumdioxid, Zeolith, Zirkoniumoxid und Titandioxid enthält.

5. Wasser-Wasserstoff-Austauschreaktionsverfahren für eine Wasser-Wasserstoff-Austauschreaktion zwischen Feuchtigkeit und Wasserstoff, in der Feuchtigkeit und Wasserstoff, von denen mindestens eines ein Wasserstoffisotop enthält, reagieren können, um einen Wasserstoffisotopenaustausch bei 25°C oder mehr und 95°C oder weniger zu bewirken, wobei die Feuchtigkeit und der Wasserstoff in Gegenwart eines Katalysators für eine Wasser-Wasserstoff-Austauschreaktion reagieren können, wobei der Katalysator ein katalytisches Metall umfasst, das auf einem Träger, der aus einem anorganischen Oxid gebildet ist, geträgert ist, wobei

der Träger aus einem anorganischen Oxid gebildet ist, das eine hydrophobe Verbindung aufweist, die an eine Oberfläche des anorganischen Oxids gebunden ist, und hydrophob gemacht wurde, das katalytische Metall aus Platin besteht, und der Chlorgehalt pro 1 Massen-% der Menge von geträgertem Platin 25 ppm oder mehr und 1000 ppm oder weniger ist basierend auf der Gesamtmasse des Katalysators.

**6.** Wasser-Wasserstoff-Austauschreaktionsverfahren nach Anspruch 5, wobei die hydrophobe Verbindung, die an die anorganische Oxidoberfläche des Trägers des Katalysators gebunden ist, eine hydrophobe Verbindung ist, die mindestens eine von einer organischen Silanverbindung und einer Fluorharzverbindung enthält.

**7.** Wasser-Wasserstoff-Austauschreaktionsverfahren nach Anspruch 6, wobei die organische Silanverbindung, die an die anorganische Oxidoberfläche gebunden ist, ein Silankupplungsmittel mit mindestens einer von einer Vinylgruppe, einer Epoxygruppe, einer Styrylgruppe, einer Methacrylgruppe, einer Acrylgruppe, einer Aminogruppe, einer Isocyanuratgruppe, einer Ureidogruppe, einer Mercaptogruppe, einer Sulfidgruppe und einer Isocyanatgruppe ist oder wobei die Fluorharzverbindung, die an die anorganische Oxidoberfläche gebunden ist, mindestens eines von Polytetrafluorethylen (PTFE), Polychlortrifluorethylen (PCTFE), Polyvinylidenfluorid (PVDF), Polyvinylfluorid (PVF), einem Tetrafluorethylen-perfluoralkylvinylether-Copolymer (PFA), einem Tetrafluorethylen-hexafluorpropylen-Copolymer (FEP), einem Ethylen-tetrafluorethylen-Copolymer (ETFE), einem Ethylenchlortrifluorethylen-Copolymer (ECTFE) und einem Tetrafluorethylen-perfluordioxol-Copolymer (TFE/PDD) ist.

**8.** Wasser-Wasserstoff-Austauschreaktionsverfahren nach einem der Ansprüche 5 bis 7, wobei die Menge an geträgertem Platin auf dem Träger des Katalysators 0,3 Massen-% oder mehr ist, basierend auf der Gesamtmasse des Katalysators und/oder wobei das anorganische Oxid, das den Träger bildet, mindestens eines von Aluminiumoxid, Siliciumdioxid, Zeolith, Zirkoniumoxid und Titandioxid enthält.

**Revendications**

**1.** Utilisation d'un catalyseur pour une réaction d'échange eau-hydrogène entre l'humidité et l'hydrogène, dans laquelle on laisse réagir l'humidité et l'hydrogène, dont l'un au moins contient un isotope d'hydrogène, pour provoquer un échange d'isotope d'hydrogène à 25°C ou plus et à 95°C ou moins,
dans laquelle le catalyseur comprend un métal catalytique supporté sur un support formé d'un oxyde inorganique, dans laquelle
le support est formé d'un oxyde inorganique qui a un composé hydrophobe lié à une surface de l'oxyde inorganique et qui a été rendu hydrophobe,
le métal catalytique est constitué de platine, et la teneur en chlore pour 1 % en masse de la quantité de platine supporté est de 25 ppm ou plus et de 1 000 ppm ou moins par rapport à la masse totale du catalyseur.

**2.** Utilisation du catalyseur pour une réaction d'échange eau-hydrogène selon la revendication 1, dans laquelle le composé hydrophobe lié à la surface de l'oxyde inorganique est un composé hydrophobe contenant au moins l'un parmi un composé de silane organique et un composé de résine fluorée.

**3.** Utilisation du catalyseur pour une réaction d'échange eau-hydrogène selon la revendication 2, dans laquelle le composé silane organique lié à la surface d'oxyde inorganique est un agent de couplage silane ayant au moins un parmi un groupe vinyle, un groupe époxy, un groupe styryle, un groupe méthacrylique, un groupe acrylique, un groupe amino, un groupe isocyanurate, un groupe uréido, un groupe mercapto, un groupe sulfure et un groupe isocyanate ou dans laquelle le composé résine fluorée lié à la surface d'oxyde inorganique est au moins un parmi polytétrafluoroéthylène (PTFE), le polychlorotrifluoroéthylène (PCTFE), le polyfluorure de vinylidène (PVDF), le polyfluorure de vinyle (PVF), un copolymère tétrafluoroéthylène-perfluoroalkyl vinyl éther (PFA), un copolymère tétrafluoroéthylène-hexafluoropropylène (FEP), un copolymère éthylène-tétrafluoroéthylène (ETFE), un copolymère éthylène-chlorotrifluoroéthylène (ECTFE) et un copolymère tétrafluoroéthylène-perfluorodioxol (TFE/PDD).

**4.** Utilisation du catalyseur pour une réaction d'échange eau-hydrogène selon l'une quelconque des revendications 1 à 3, dans laquelle la quantité de platine supportée est de 0,3 % en masse ou plus par rapport à la masse totale du catalyseur et/ou dans laquelle l'oxyde inorganique formant le support contient au moins l'un parmi alumine, silice, zéolite, zircone et oxyde de titane.

**5.** Méthode de réaction d'échange eau-hydrogène pour une réaction d'échange eau-hydrogène entre l'humidité et l'hydrogène, dans laquelle on laisse réagir l'humidité et l'hydrogène, dont au moins un contient un isotope d'hydrogène, pour provoquer un échange d'isotope d'hydrogène à 25°C ou plus et 95°C ou moins, dans laquelle on laisse réagir l'humidité et l'hydrogène en présence d'un catalyseur pour une réaction d'échange eau-hydrogène, dans laquelle le catalyseur comprend un métal catalytique supporté sur un support formé d'un oxyde inorganique,

dans laquelle le support est formé d'un oxyde inorganique qui a un composé hydrophobe lié à une surface de l'oxyde inorganique et a été rendu hydrophobe, le métal catalytique est constitué de platine, et la teneur en chlore pour 1 % en masse de la quantité de platine supporté est de 25 ppm ou plus et de 1 000 ppm ou moins sur la masse totale du catalyseur.

**6.** Méthode de réaction d'échange eau-hydrogène selon la revendication 5,
dans laquelle le composé hydrophobe lié à la surface d'oxyde inorganique du support de catalyseur est un composé hydrophobe contenant au moins un parmi un composé de silane organique et un composé de résine fluorée.

**7.** Méthode de réaction d'échange eau-hydrogène selon la revendication 6, dans laquelle le composé silane organique lié à la surface d'oxyde inorganique est un agent de couplage silane ayant au moins un groupe vinyle, un groupe époxy, un groupe styryle, un groupe méthacrylique, un groupe acrylique, un groupe amino, un groupe isocyanurate, un groupe uréido, un groupe mercapto, un groupe sulfure et un groupe isocyanate ou dans lequel le composé résine fluorée lié à la surface d'oxyde inorganique est au moins un parmi le polytétrafluoroéthylène (PTFE), le polychlorotrifluoroéthylène (PCTFE), le fluorure de polyvinylidène (PVDF), le fluorure de polyvinyle (PVF), un copolymère tétrafluoroéthylène-perfluoroalkylvinyléther (PFA), un copolymère tétrafluoroéthylène-hexafluoropropylène (FEP), un copolymère éthylène-tétrafluoroéthylène (ETFE), un copolymère éthylène-chlorotrifluoroéthylène (ECTFE) et un copolymère tétrafluoroéthylène-perfluorodioxol (TFE/PDD).

**8.** Méthode de réaction d'échange eau-hydrogène selon l'une quelconque des revendications 5 à 7, dans laquelle la quantité de platine supportée sur le support des catalyseurs est de 0,3 % en masse ou plus par rapport à la masse totale du catalyseur et/ou dans lequel l'oxyde inorganique formant le support contient au moins un des éléments suivants : alumine, silice, zéolite, zircone et oxyde de titane.

# FIG. 1

WATER (LIQUID)

CATALYST LAYER

$$H_2O(v)+HT(g)$$
$$\uparrow \downarrow$$
$$HTO(v)+H_2(g)$$

PACKING LAYER

$$H_2O(v) +HTO(l)$$
$$\uparrow \downarrow$$
$$HTO(v)+ H_2O(l)$$

WATER   HYDROGEN
VAPOR      GAS

FIG. 2

## FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005000912 A
- EP 2514526 A1
- US 3981976 A
- EP 3127609 A1